# EUROPEAN PATENT APPLICATION

(11) **EP 3 379 140 A1**
(43) Date of publication of application: **26.09.2018**
(21) Application number: 16866315.1
(22) Date of filing: 15.11.2016
(51) Int. Cl.: F21S 11/00, E06B 5/00, G02B 5/02

(54) **LIGHTING DEVICE AND LIGHTING SYSTEM**

(30) Priority: 17.11.2015 JP 2015225169
(71) Applicant: Sharp Kabushiki Kaisha, Sakai City, Osaka 590-8522 (JP)
(72) Inventor: SHINOZAKI Daisuke, Sakai City Osaka 590-8522 (JP); KAMADA Tsuyoshi, Sakai City Osaka 590-8522 (JP); UEKI Shun, Sakai City Osaka 590-8522 (JP); NISHINAKA Shumpei, Sakai City Osaka 590-8522 (JP); KANNO Toru, Sakai city Osaka 590-8522 (JP)
(74) Representative: Müller Hoffmann & Partner
(86) International application number: PCT/JP2016/083830
(87) International publication number: WO 2017/086314

(57) **Abstract**

A daylighting device includes: a translucent base material; a translucent daylighting layer disposed on a first face side of the base material, the daylighting layer including daylighting sections and gap portions provided between the daylighting sections; and a translucent warping-restraining layer disposed on a second face side of the base material, wherein the daylighting layer and the warping-restraining layer have approximately equal linear expansion coefficients. Another daylighting device includes: a translucent base material; a translucent daylighting layer disposed on a first face side of the base material, the daylighting layer including daylighting sections and gap portions provided between the daylighting sections; and a translucent warping-restraining layer disposed on a second face side of the base material, wherein both the daylighting layer and the warping-restraining layer have either a greater linear expansion coefficient or a smaller linear expansion coefficient than does the base material.

## Description

### Technical Field

The present invention, in some aspects thereof, relates to daylighting devices and day lighting systems.

The present application claims priority to Japanese Patent Application, Tokugan, No. 2015-225169 filed in Japan on November 17, 2015, which is incorporated herein by reference in its entirety.

### Background Art

Daylighting devices containing a daylighting film are conventionally installed over a face of a window pane to efficiently allow indoors outdoor light such as sunlight incident on the window pane (see, for example, Patent Literature 1).

### Citation List

### Patent Literature

Patent Literature 1: Japanese Unexamined Patent Application Publication, Tokukai, No. 2013-156554

### Summary of Invention

### Technical Problem

These daylighting devices can be susceptible to warping due to thermal contraction of the daylighting film.

The present invention, in an aspect thereof, has been made in view of this problem of conventional art. One of the objects of that aspect of the invention is to provide a daylighting device that is less likely to warp.

### Solution to Problem

The present invention, in one aspect thereof, is directed to a daylighting device including: a translucent base material; a translucent daylighting layer disposed on a first face side of the base material, the daylighting layer including a plurality of daylighting sections and a plurality of gap portions provided between the daylighting sections; and a translucent warping-restraining layer disposed on a second face side of the base material, wherein the daylighting layer and the warping-restraining layer have approximately equal linear expansion coefficients.

In this daylighting device, the daylighting layer may have an in-plane, maximum expansion direction in which the linear expansion coefficient thereof is a maximum and an in-plane, minimum expansion direction in which the linear expansion coefficient thereof is a minimum; the warping-restraining layer may have an in-plane, maximum expansion direction in which the linear expansion coefficient thereof is a maximum and an in-plane, minimum expansion direction in which the linear expansion coefficient thereof is a minimum; and the maximum expansion directions of the daylighting layer and the warping-restraining layer may match substantially with each other, and the minimum expansion directions of the daylighting layer and the warping-restraining layer may match substantially with each other.

The present invention, in another aspect thereof, is directed to a daylighting device including: a translucent base material; a translucent daylighting layer disposed on a first face side of the base material, the daylighting layer including a plurality of daylighting sections and a plurality of gap portions provided between the daylighting sections; and a translucent warping-restraining layer disposed on a second face side of the base material, wherein both the daylighting layer and the warping-restraining layer have either a greater linear expansion coefficient or a smaller linear expansion coefficient than does the base material.

In any one of these daylighting devices, the linear expansion coefficient of one of the daylighting layer and the warping-restraining layer that lies on a light-incident side of the base material may be smaller than the linear expansion coefficient of the other one of the layers.

With the base material now being referred to as the first base material, any one of these daylighting devices may further include: a second translucent base material disposed forward or backward of the first base material with respect to a thickness direction of the first base material; a light-diffusing layer disposed on a first face side of the second base material and configured to diffuse incident light; and a translucent warping-restraining layer disposed on a second face side of the second base material.

Any one of these daylighting devices may further include an outer frame configured to hold the base material.

The present invention, in a further aspect thereof, is directed to a daylighting system includes: any one of these daylighting devices; an interior lighting fixture; a detection unit configured to detect indoor brightness; and a control unit configured to control the interior lighting fixture and the detection unit.

### Advantageous Effects of Invention

The present invention, in one aspect thereof, may provide a daylighting device that is less likely to warp.

### Brief Description of Drawings

FIG. 1 is an illustration representing an overall structure of a daylighting device in accordance with a first embodiment.
FIG. 2A is a vertical cross-sectional view of the entire daylighting device in accordance with the first embodiment.
FIG. 2B is a vertical cross-sectional view of the daylighting device in accordance with the first embodiment, showing a part of FIG. 2A in an enlarged manner.
FIG. 3 is an exploded view of the daylighting device in accordance with the first embodiment.
FIG. 4 is a schematic view of a room model in which the daylighting device in accordance with the first embodiment is installed.
FIG. 5 is a cross-sectional view of daylighting sections of the daylighting device, illustrating an internal light-controlling function of the daylighting sections.
FIG. 6A is a first cross-sectional view of a variation example of the daylighting section.
FIG. 6B is a second cross-sectional view of a variation example of the daylighting section.
FIG. 6C is a third cross-sectional view of a variation example of the daylighting section.
FIG. 6D is a fourth cross-sectional view of a variation example of the daylighting section.
FIG. 7A is a cross-sectional view of the daylighting sections disposed facing outdoors and a resultant light path.
FIG. 7B is a cross-sectional view of the daylighting sections disposed facing indoors and a resultant light path.
FIG. 8 is a vertical cross-sectional view of a daylighting device in accordance with a second embodiment.
FIG. 9 is a perspective view of an example light-diffusing layer.
FIG. 10 is a perspective view of an example light-diffusing layer.
FIG. 11 is a perspective view of an example light-diffusing section.
FIG. 12 is a perspective view of an example light-diffusing section.
FIG. 13 is a perspective view of an example light-diffusing section.
FIG. 14 is a vertical cross-sectional view of a daylighting device in accordance with a third embodiment.
FIG. 15 is a vertical cross-sectional view of a daylighting device in accordance with a fourth embodiment.
FIG. 16 is a vertical cross-sectional view of a daylighting device in accordance with a fifth embodiment.
FIG. 17 is a vertical cross-sectional view of a daylighting device in accordance with a sixth embodiment.
FIG. 18 is a vertical cross-sectional view of a daylighting device in accordance with a seventh embodiment.
FIG. 19 is a vertical cross-sectional view of a daylighting device in accordance with an eighth embodiment.
FIG. 20 is a vertical cross-sectional view of a daylighting device in accordance with a ninth embodiment.
FIG. 21 is a vertical cross-sectional view of a daylighting device in accordance with a tenth embodiment.
FIG. 22 is a vertical cross-sectional view of a daylighting device in accordance with an eleventh embodiment.
FIG. 23 is a vertical cross-sectional view of a daylighting device in accordance with a twelfth embodiment.
FIG. 24 is a vertical cross-sectional view of a variation example of the daylighting device in accordance with the twelfth embodiment.
FIG. 25 is a perspective view of a daylighting device in accordance with a thirteenth embodiment.
FIG. 26 is a perspective view of a daylighting device in accordance with a fourteenth embodiment.
FIG. 27 is a perspective view of a daylighting device in accordance with a fifteenth embodiment.
FIG. 28 is a cross-sectional view, taken along line J-J' in FIG. 29, of a room model in which a daylighting device and a lighting-modulation system are installed.
FIG. 29 is a plan view of a ceiling of the room model.
FIG. 30 is a graph representing a relationship between the illuminance produced by daylighting light (natural light) guided into the interior (guided indoors) by a daylighting device and the illuminance produced by room lighting devices (lighting-modulation system).
FIG. 31 is a cross-sectional view of a variation example structure that may be employed in the daylighting device of each embodiment.

### Description of Embodiments

The following will describe embodiments of the present invention in reference to drawings. In the drawings used in the following description, members are drawn to suitable arbitrary scales to show each member with readily recognizable dimensions.

### First Embodiment

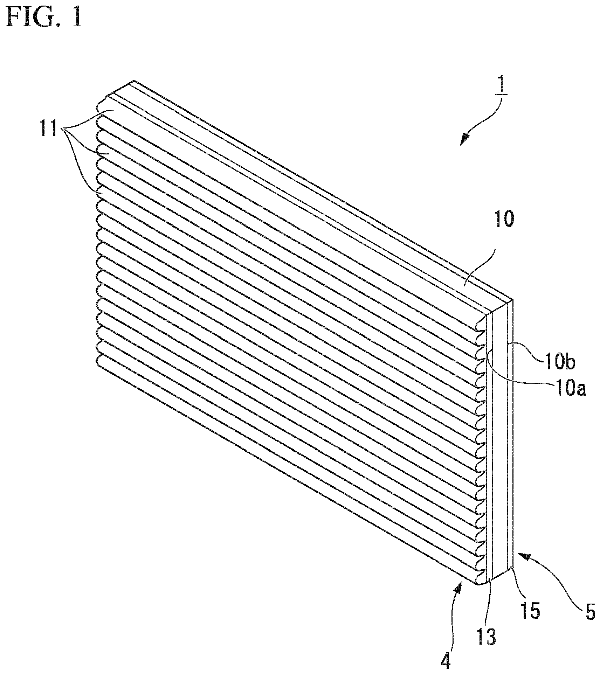

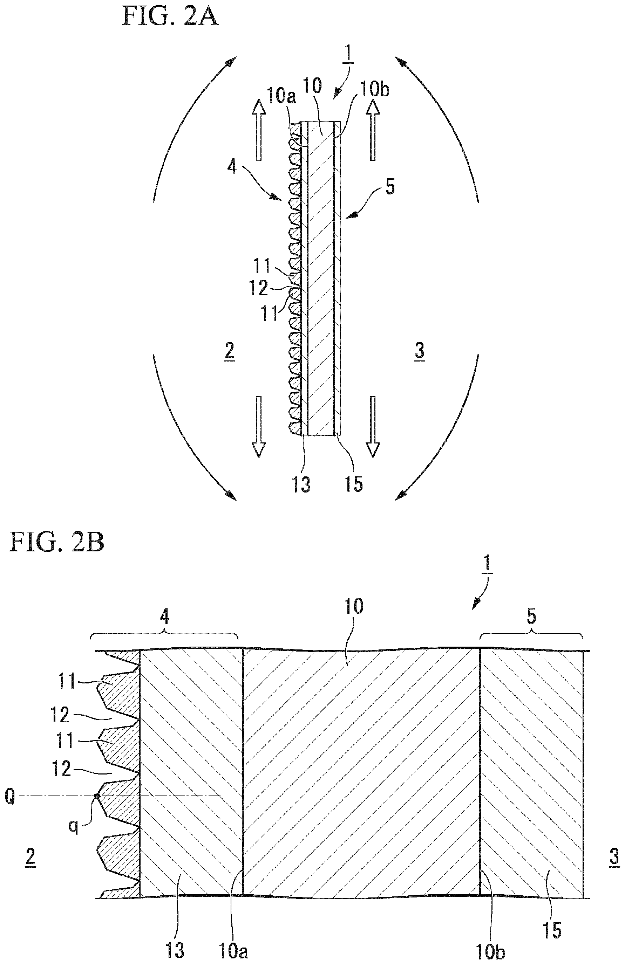

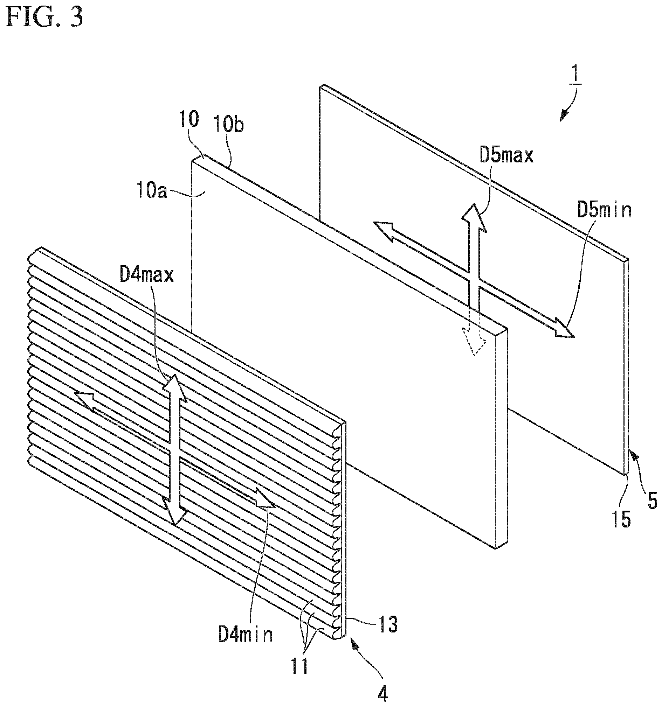

FIG. 1 is an illustration representing an overall structure of a daylighting device 1 in accordance with a first embodiment. FIG. 2A is a vertical cross-sectional view of the daylighting device 1. FIG. 2B shows a part of FIG. 2A in an enlarged manner. FIG. 3 is an exploded view of the daylighting device 1.

The daylighting device 1 in accordance with the present embodiment is an example daylighting device to be installed over a window to guide sunlight (outdoor light) into a room. The daylighting device 1 includes a base material 10, a translucent daylighting layer 4, and a translucent warping-restraining layer 5. The base material 10 is a translucent plate. The daylighting layer 4 is disposed on a first face 10a of the base material 10. The warping-restraining layer 5 is disposed on a second face 10b of the base material 10. As shown in FIG. 2B, the daylighting layer 4 includes; daylighting sections 11; gap portions 12 between the daylighting sections 11; and a support base material 13 between the base material 10 and the daylighting sections 11. The warping-restraining layer 5 includes a warping-restraining portion 15. In the present embodiment, the first face 10a of the base material 10 faces a room's exterior 2 whereas the second face 10b faces the room's interior 3.

The base material 10 of the present embodiment is, for example, a light-transmitting base material made of, for example, a resin such as a thermoplastic polymer, a thermosetting resin, or a photopolymerizable resin. Examples of the light-transmitting base material include acrylic-based polymers, olefin-based polymers, vinyl-based polymers, cellulose-based polymers, amide-based polymers, fluorine-based polymers, urethane-based polymers, silicone-based polymers, and imide-based polymers. More specific, preferred examples include light-transmitting plates made of triacetyl cellulose (TAC), polyethylene terephthalate (PET), cycloolefin polymer (COP), polycarbonate (PC), polyethylene naphthalate (PEN), polyether sulfone (PES), and polyimide (PI). The base material 10 may alternatively be made of glass. The base material 10 may have any thickness and may have a multilayered structure including a stack of materials.

The base material 10 preferably has a total light transmittance of 90% or higher when measured as specified in JIS K7361-1, which may give sufficient transparency.

Referring to FIG. 2B, the daylighting sections 11 are tiny protrusions on the order of a few tens of micrometers to a few hundreds of micrometers provided on the first face 10a side of the base material 10 to guide outdoor light (sunlight) into the interior 3. The daylighting sections 11 are arranged in stripes. The daylighting sections 11 are disposed to extend horizontally and sit one above each other (parallel to each other) in the vertical direction. Each daylighting section 11 has a polygonal shape in the cross-section taken perpendicular to the length thereof.

The daylighting sections 11 are fixed to the first face 10a of the base material 10 with the support base material 13 intervening therebetween. The support base material 13 transmits light. The support base material 13 is preferably made of the same material as the daylighting sections 11. The present embodiment gives as an example the daylighting sections 11 being fixed to the base material 10 with the support base material 13 intervening therebetween. This structure is however by no means meant to limit the present invention. Alternatively, the daylighting sections 11 may be disposed directly on one of the faces (first face 10a) of the base material 10.

Referring to FIG. 2B, each daylighting section 11 is a polygonal-prism structural body with a hexagonal cross-section and is asymmetric with respect to line Q that passes through an apex q, a point on the daylighting section 11 removed furthest from the base material 10, and that is perpendicular to the base material 10. The cross-section of the daylighting section 11 has a smaller-than-180° interior angle at five out of the six vertices thereof. The cross-sectional shape of the daylighting section 11 is by no means limited to the one illustrated in the drawings and may be designed suitably to have a different shape depending on the intended use and other requirements on the daylighting device 1. In other words, the daylighting section 11 may, for example, be triangular or a curved-surface shape in the cross-section taken perpendicular to the length thereof, provided that the shape of the daylighting section 11 confers a daylighting function.

The gap portions 12, provided between adjacent daylighting sections 11, contain air therein and therefore have a refractive index of approximately 1.0. Specifying the refractive index of the gap portions 12 to 1.0 minimizes the critical angles of the interfaces of the gap portions 12 and the daylighting sections 11. The base material 10 and the daylighting sections 11 preferably have approximately equal refractive indices for the following reasons. If there is a large difference between the refractive index of the base material 10 and the refractive index of the daylighting sections 11, the light entering the daylighting sections 11 from the base material 10 may undesirably be refracted or reflected at the interface of the daylighting sections 11 and the base material 10. These phenomena could lead to unfavorable results, including reduced luminance and a failure to achieve a desirable daylighting ability. Specifying the refractive index of the base material 10 and the refractive index of the daylighting sections 11 to approximately equal values achieves a desirable daylighting ability, improves light use efficiency, and reduces uncomfortable reflection of light into the room interior 3.

The daylighting sections 11 are made of a light-transmitting and photosensitive organic material such as an acrylic resin, an epoxy resin, or a silicone resin. These resins may be mixed with, for example, a polymerization initiator, a coupling agent, a monomer, or an organic solvent, to obtain a mixture of transparent resins for use. The polymerization initiator may contain various additional components such as stabilizers, inhibitors, plasticizers, fluorescent whitening agents, release agents, chain transfer agents, and other photopolymerizable monomers. The daylighting sections 11 preferably have a total light transmittance of 90% or higher when measured as specified in JIS K7361-1, which may give sufficient transparency.

The warping-restraining portion 15 is fixed to the second face 10b of the base material 10. The warping-restraining portion 15 constitutes the warping-restraining layer 5. The warping-restraining portion 15 in the present embodiment is made of the same material as the daylighting sections 11 and the support base material 13, which gives approximately equal linear expansion coefficients to the warping-restraining layer 5 and the daylighting layer 4. "Approximately equal" refers to a situation in which the linear expansion coefficient of the warping-restraining layer 5 is within ±3% of the linear expansion coefficient of the daylighting layer 4. In addition, the warping-restraining portion 15 and the support base material 13 have approximately equal thicknesses, where "approximately equal" refers to a situation in which the thickness of the warping-restraining portion 15 is within ±3% of the thickness of the support base material 13.

The warping-restraining layer 5, having the same linear expansion coefficient as the daylighting layer 4 and provided on the second face 10b of the base material 10, thermally expands and contracts by approximately the same degree as the daylighting layer 4, when the daylighting layer 4 thermally expands and contracts relative to the base material 10 as shown in FIG. 2A. This structure cancels out stresses produced on the first face 10a and the second face 10b of the base material 10 that could otherwise warp the base material 10, thereby restraining the base material 10 from warping.

A sheet of resin material generally has a linear expansion coefficient that exhibits directionality varying depending on, for example, the roll direction in the process of manufacturing. In the present embodiment, the warping-restraining layer 5 (i.e., the warping-restraining portion 15) and the daylighting layer 4 (i.e., the support base material 13 and the daylighting sections 11) likewise have a linear expansion coefficient that exhibits directionality. Specifically, the warping-restraining layer 5 has an in-plane, maximum expansion direction D5max in which the linear expansion coefficient thereof is a maximum and an in-plane, minimum expansion direction D5min in which the linear expansion coefficient thereof is a minimum. Similarly, the daylighting layer 4 has an in-plane, maximum expansion direction D4max in which the linear expansion coefficient thereof is a maximum and an in-plane, minimum expansion direction D4min in which the linear expansion coefficient thereof is a minimum. The maximum expansion direction and the minimum expansion direction are generally perpendicular to each other.

The linear expansion coefficient of the warping-restraining layer 5 and the linear expansion coefficient of the daylighting layer 4 preferably have the same directionality in the present embodiment. In other words, the maximum expansion direction of the daylighting layer 4 matches substantially with the maximum expansion direction of the warping-restraining layer 5. Additionally, the minimum expansion direction of the daylighting layer 4 preferably matches substantially with the minimum expansion direction of the warping-restraining layer 5. "Match substantially" refers to a situation in which the maximum or minimum expansion directions of the daylighting layer 4 and the warping-restraining layer 5 differ by an angle of less than 5°. Furthermore, the daylighting layer 4 and the warping-restraining layer 5 preferably have approximately equal linear expansion coefficients both in the maximum expansion direction and in the minimum expansion direction. In this structure, the direction in which the warping-restraining layer 5 thermally expands and contracts by a relatively large degree matches with the direction in which the daylighting layer 4 thermally expands and contracts by a relatively large degree, and the base material 10 has the same expansion/contraction directionality on the first face 10a and on the second face 10b. The structure may hence restrain the base material 10 from warping in three dimensions.

Next will be described a surrounding environment for, and the daylighting function of, the daylighting device 1.

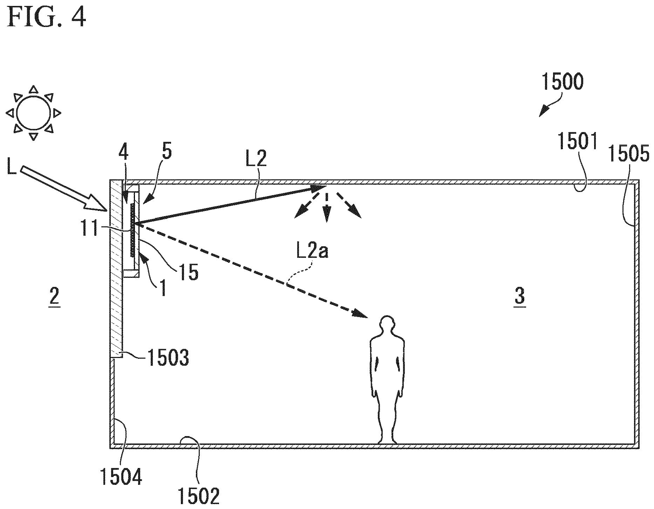

FIG. 4 is a schematic view of a room model 1500 in which the daylighting device 1 is installed. In the room model 1500 shown in FIG. 4, the daylighting device 1 is assumed to be used in an office room as an example. Specifically, in the room model 1500, outdoor light L comes from an obliquely upward direction through a window pane 1503 into the interior 3 surrounded by a ceiling 1501, a floor 1502, a front wall 1504 where the window pane 1503 is installed, and a back wall 1505 opposite the front wall 1504. The daylighting device 1 is installed over an upper part of the indoor side of the window pane 1503. Outdoor light L is incident to the window pane 1503 from an obliquely upward direction. The light incident on the window pane 1503 is transmitted through the window pane 1503 and strikes the daylighting device 1.

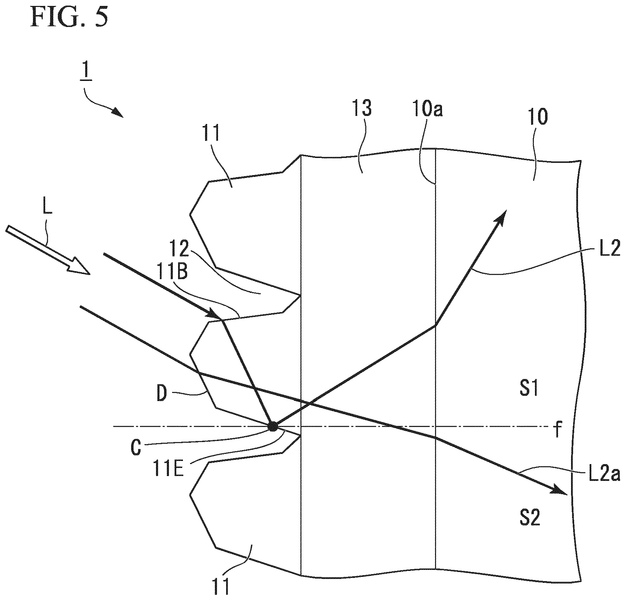

FIG. 5 is a cross-sectional view of the daylighting sections 11 of the daylighting device 1, illustrating an internal light-controlling function of the daylighting sections. Some rays of light L that are incident to the daylighting device 1 strike upwardly tilted faces 11B of the daylighting sections 11 ("light L2"), and some strike downwardly tilted faces 11D ("light L2a").

In the following description, an incident point C is defined as a point at which a ray of light L2 striking the upwardly tilted face 11B of the daylighting section 11 hits a face 11E (reflecting face) of the daylighting section 11. A straight line f is defined as a virtual straight line that passes through the incident point C and that is perpendicular to the first face 10a of the base material 10. Additionally, a first space S1 is defined as one of the two spaces bordering at the horizontal plane containing the straight line f that contains the light hitting at the incident point C, whilst a second space S2 is defined as the other one of the two spaces that contains no light hitting at the incident point C.

Light L2, entering the daylighting section 11 through the upwardly tilted face 11B, undergoes total reflection at the face 11E of the daylighting section 11, then travels in an obliquely upward direction, that is, into the first space S1, and exits the daylighting section 11 through a face 11A of the daylighting section 11. After exiting the daylighting section 11, light L2 is transmitted through the base material 10 and exits the base material 10 toward the ceiling of the room's interior 3. The light leaving the daylighting device 1 toward the ceiling is reflected by the ceiling and illuminates the inside of the room, which may fill the need for artificial lighting.

Light L2a, having entered the daylighting section 11 through the downwardly tilted face 11D, travels through the daylighting section 11 and the base material 10 in an obliquely downward direction, that is, into the second space S2, and exits the daylighting device 1 into the interior 3 in an obliquely downward direction. Such light L2a could be what is called glaring light which is uncomfortable to occupants of the room. A later embodiment will describe a means of reducing glaring light L2a.

It is preferable that both of the linear expansion coefficients of the daylighting layer 4 and the warping-restraining layer 5 be either greater or smaller than the linear expansion coefficient of the base material 10. When this is actually the case, it may be possible to suppress warping of the base material 10 to some degree even when the linear expansion coefficients of the daylighting layer 4 and the warping-restraining layer 5 do not exactly match.

The base material could warp due to a difference in linear expansion coefficient between the base material and the daylighting layer. Assume, as an example, a situation where the daylighting layer has a smaller linear expansion coefficient than does the base material, in a daylighting device with no warping-restraining layer 5. If ambient temperature rises, the daylighting layer expands less than the base material 10. Therefore, the base material 10 bends at the end portions thereof toward the daylighting layer 4.

In contrast, in the present embodiment, the warping-restraining layer 5 may exert, on the second face 10b of the base material 10, a stress in a direction opposite to the direction in which the base material 10 could warp due to a difference in linear expansion coefficient between the base material 10 and the daylighting layer 4. As an example, if both the daylighting layer 4 and the warping-restraining layer 5 have a smaller linear expansion coefficient than does the base material 10, the end portions of the base material 10 are put under stresses, one acting on the daylighting layer 4 side of the base material 10 to bend the base material 10 toward that side and another acting on the warping-restraining layer 5 side of the base material 10 to bend the base material 10 toward that side, when ambient temperature rises. These stresses, acting repulsively on the first face 10a and the second face 10b of the base material 10, cancel out each other. The present embodiment may therefore suppress warping.

In the daylighting device 1 in the room model shown in FIG. 4, the daylighting layer 4 is positioned facing the exterior 2, and the warping-restraining layer 5 is positioned facing the interior 3. The daylighting layer 4 receives direct incoming light L from the sun and its temperature rises easily. Therefore, the daylighting layer 4 is heated, and hence expands, more than the warping-restraining layer 5. Therefore, it is preferable that both the daylighting layer 4 and the warping-restraining layer 5 have either a greater linear expansion coefficient or a smaller linear expansion coefficient than does the base material 10 and also that the daylighting layer 4, located on the light-incident side (facing the exterior 2), have a smaller linear expansion coefficient than does the warping-restraining layer 5. This structure may reduce the expansion of layers on the exterior 2 side the temperature of which could rise more and maintain a good balance of stresses exerted on the faces of the base material 10, thereby suppressing warping of the base material 10. As another example, if the daylighting device 1 is installed such that the daylighting layer 4 faces the interior 3 and the warping-restraining layer 5 faces the exterior 2, the warping-restraining layer 5 is heated easily by sunlight. Therefore, it is preferable that the warping-restraining layer 5 have a smaller linear expansion coefficient than does the daylighting layer 4. As demonstrated by these examples, it is preferable that one of the daylighting layer 4 and the warping-restraining layer 5 that is positioned on the light-incident side of the base material 10 have a smaller linear expansion coefficient than does the other one.

### Shape Variations of Daylighting Sections

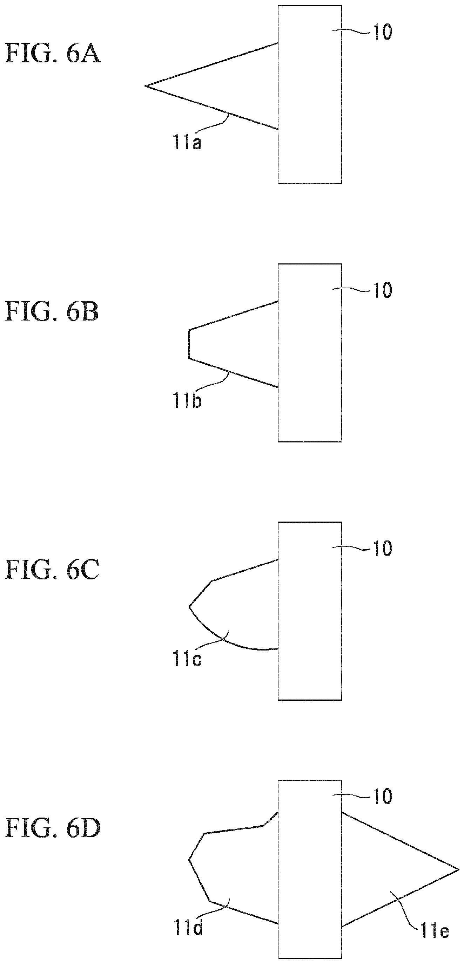

The daylighting section 11 of the present embodiment is hexagonal in the cross-section which intersects with the length thereof as shown in FIG. 5. The cross-sectional shape of the daylighting section 11 is however by no means limited to a hexagon and may be a pentagon or a triangle. FIGs. 6A to 6D are cross-sectional views of shape variations of the daylighting sections.

FIG. 6A shows a daylighting section 11a that is an isosceles triangle in the cross-section taken perpendicular to the length thereof.

FIG. 6B shows a daylighting section 11b that is trapezoidal in the cross-section taken perpendicular to the length thereof.

FIG. 6C shows a daylighting section 11c that is a polygonal prism with a curved side surface.

FIG. 6D shows a first daylighting section 11d and a second daylighting section 11e provided on different faces of the base material 10. The first daylighting section 11d and the second daylighting section 11e are respectively provided on the respective faces of the base material 10. The first daylighting section 11d, provided on one of the faces of the base material 10, has the same shape as the daylighting section 11. The second daylighting section 11e, provided on the other face, is an isosceles triangle in the cross-section thereof. The daylighting sections provided on the two faces of the base material 10 do not necessarily have the shapes shown in FIG. 6D.

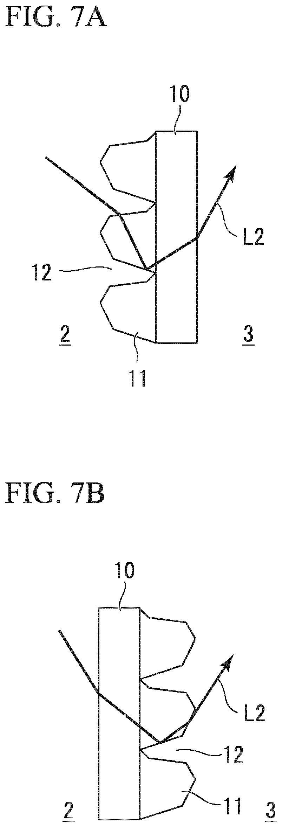

The daylighting sections 11 of the present embodiment are provided on the exterior 2 side of the base material 10, but may alternatively be provided on the interior 3 side. FIG. 7A shows a path of light L2 when the daylighting sections 11 are disposed facing the exterior 2. FIG. 7B shows a path of light L2 when the daylighting sections 11 are disposed facing the interior 3. As shown in FIGs. 7A and 7B, light L2 takes similar paths regardless of on which one of the faces of the base material 10 the daylighting sections 11 are disposed. These layouts would hence deliver similar advantages.

### Method of Manufacturing Daylighting Device

The daylighting device 1 is manufactured by stacking the daylighting layer 4 and the warping-restraining layer 5 respectively on the first face 10a and the second face 10b of the base material 10. The daylighting layer 4 and the warping-restraining layer 5 may be formed, for example, by UV imprinting. The following will describe a method of forming the daylighting layer 4 by UV imprinting. The warping-restraining layer 5 may be formed by a similar method.

First, a mold for the daylighting layer 4 is filled with an ultraviolet-curing resin such as acrylic resin, polycarbonate, or polypropylene.

The base material 10 is then placed on the mold filled with an ultraviolet-curing resin, and pressure is applied so as to press the first face 10a against the mold. Under the pressure, the ultraviolet-curing resin spreads into the cavities of the mold by means of capillary action, leaving no empty space therein.

Next, the ultraviolet-curing resin is, in this state, irradiated with ultraviolet light via the base material 10 so that the ultraviolet-curing resin can set. The base material 10, together with the hardened resin thereon, is then separated from the mold. This process transfers the corrugated shape of the mold onto the first face 10a of the base material 10, forming the daylighting layer 4 complete with the daylighting sections 11 and the gap portions 12.

This method is merely an illustrative example. Alternatively, the daylighting layer 4 and the warping-restraining layer 5 may be formed by hot pressing. To do so, a thermoplastic resin is applied to the first face 10a of the base material 10, and then a mold for the daylighting sections 11 is pressed against the first face 10a. Heat is applied in this state to set the thermoplastic resin. After the resin has cooled down, the base material 10, together with the hardened resin thereon, is separated from the mold, which completes the process of forming the daylighting sections 11 on the first face 10a of the base material 10 in accordance with the shape of the mold.

A transfer roller mold may be used as the mold in the UV imprinting and hot pressing described above to successively form the daylighting layer 4 and the warping-restraining layer 5.

### Function and Effect

The daylighting device 1 in accordance with the present embodiment refracts outdoor light toward the ceiling of the interior 3 in a daylighting area SA to illuminate the interior. This structure may advantageously make savings on energy consumption of the building's interior lighting equipment during the daytime (energy-saving function).

In addition, in the daylighting device 1 in accordance with the present embodiment, the provision of the warping-restraining layer 5 may suppresses warping of the base material 10. If the base material 10 warped excessively, the daylighting sections 11 would reflect and refract light in unintended directions. Light L2, which should illuminate the ceiling 1501 of the interior 3 of the room where the daylighting device 1 is disposed (see FIG. 4), could travel toward persons in the interior 3 who might find the light glaring and uncomfortable. The present embodiment may suppress warping of the base material 10 and hence generation of glaring light.

### Second Embodiment

Next will be described a daylighting device 101 in accordance with a second embodiment.

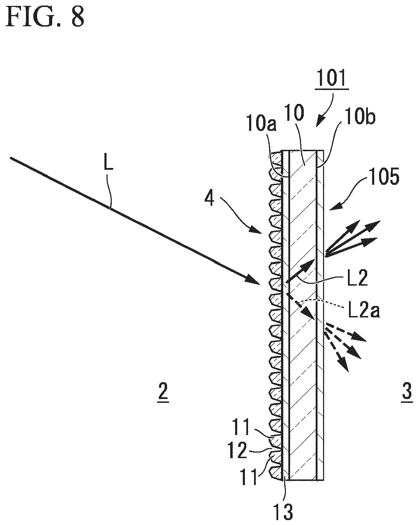

FIG. 8 is a vertical cross-sectional view of the daylighting device 101.

The daylighting device 101 in accordance with the second embodiment differs from the daylighting device 1 in accordance with the first embodiment in that the former includes a warping-restraining layer 105 that has a light-diffusing function. Members that are substantially the same as members of a previous embodiment are indicated by the same reference numerals, and description thereof is omitted.

The daylighting device 101 includes a base material 10, a translucent daylighting layer 4, and the translucent warping-restraining layer (light-diffusing layer) 105. The base material 10 is a translucent plate. The daylighting layer 4 is disposed on the first face 10a of the base material 10. The warping-restraining layer 105 is disposed on the second face 10b of the base material 10.

The warping-restraining layer 105, similarly to the warping-restraining layer 5 of the first embodiment, preferably has a linear expansion coefficient that is approximately equal to the linear expansion coefficient of the daylighting layer 4. The warping-restraining layer 105 also preferably has a maximum and a minimum expansion direction that match substantially with the maximum and the minimum expansion direction of the daylighting layer 4 respectively.

The warping-restraining layer 105 diffuses incident light (light-diffusing function). In other words, the warping-restraining layer 105 functions as a light-diffusing layer. Throughout the following description, the warping-restraining layer 105 will be referred to as the "light-diffusing layer."

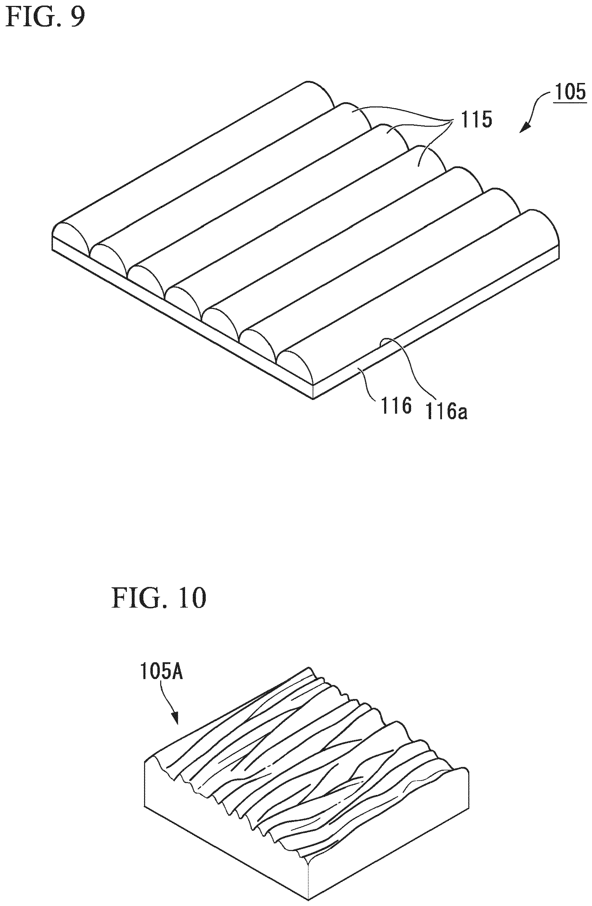

FIG. 9 is a perspective view of an example of the light-diffusing layer 105. The light-diffusing layer 105 has light-diffusing properties. Referring to FIG. 9, the light-diffusing layer 105 includes a support base material 116 and a plurality of lenticular lenses 115. The lenticular lenses 115 are arranged side by side on a face 116a of the support base material 116.

In the light-diffusing layer 105 of the present embodiment, the lenticular lenses 115 are arranged to extend horizontally and sit one above each other in the vertical direction. Because the lens surfaces of the light-diffusing layer 105 arranged in this manner have a non-zero curvature in a vertical plane and have a zero curvature in a horizontal plane, the light-diffusing layer 105 diffuses much light in the vertical direction, but does not diffuse light in horizontal directions. In addition, the lenticular lenses 115 in the light-diffusing layer 105 arranged in this manner extend in the same direction as do the daylighting sections 11. This structure is advantageous in that the warping of the base material 10 is better restrained because the daylighting layer 4 and the light-diffusing layer 105 tend to warp in the same direction. The light-diffusing layer 105 is however by no means limited to this structure and may be arranged so as to exhibit strong light-diffusing properties in horizontal directions. Alternatively, the daylighting device 101 may include an anisotropic scattering structure 105A shown in FIG. 10 in place of the light-diffusing layer 105. The anisotropic scattering structure may be, for example, a structure with micrometer-scale convexities and concavities fabricated by surface relief holographic patterning, such as light diffusion control films (trade name: "LSD") manufactured by Luminit, LLC. The daylighting device 101 may include, in place of the light-diffusing layer 105, a light-scattering layer as an isotropic scattering structure in which particles with an aspect ratio of approximately 5 to 500 are dispersed in a continuous layer.

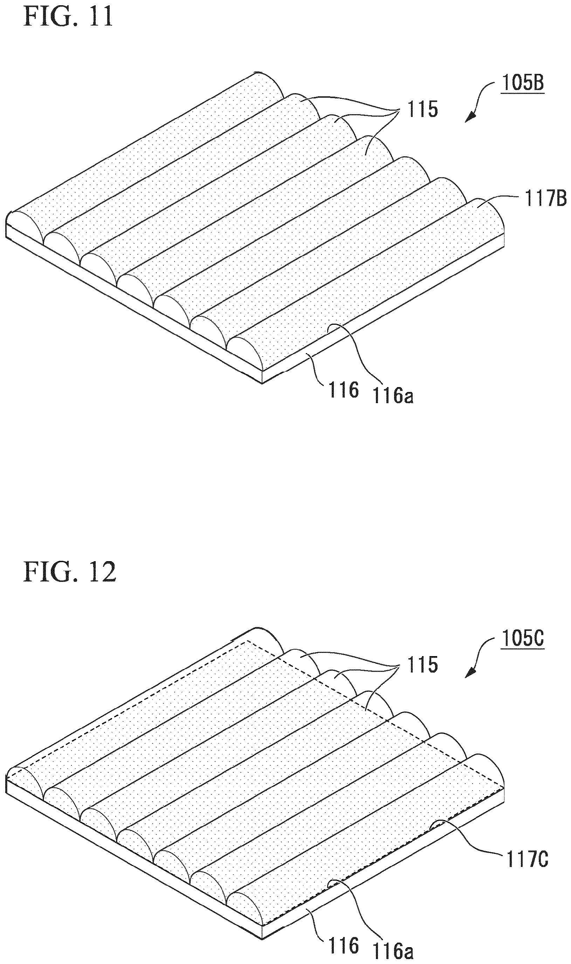

As a further alternative, the daylighting device 101 may include, in place of the light-diffusing layer 105, a light-diffusing layer 105B, 105C, or 105D that is respectively a combination of the lenticular lenses 115 and an isotropic diffusion layer 117B, 117C, or 117D as shown in FIGs. 11, 12, and 13. The isotropic diffusion layers 117B, 117C, and 117D are represented by dots in FIGs. 11 to 13.

The light-diffusing layer 105B shown in FIG. 11 includes the isotropic diffusion layer 117B on the surfaces of the lenticular lenses 115.

The light-diffusing layer 105C shown in FIG. 12 includes the isotropic diffusion layer 117C as an adhesion layer between the lenticular lenses 115 and the face 116a of the support base material 116.

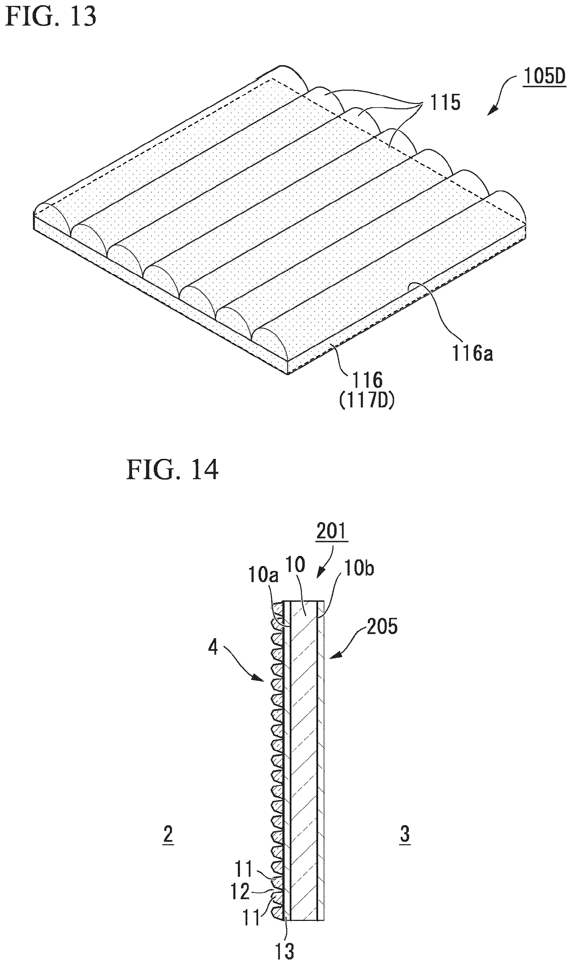

The light-diffusing layer 105D shown in FIG. 13 includes the isotropic diffusion layer 117D as the support base material 116.

The isotropic diffusion layers 117B to 117D contain light-diffusing particles being dispersed therein. Owing to these structures, the lenticular lenses 115 and the isotropic diffusion layers 117B to 117D diffuse light anisotropically and isotropically respectively in the light-diffusing layers 105B, 105C, and 105D. The structures may be employed in the light-diffusing section of the daylighting device.

Referring back to FIG. 8, of light L entering the daylighting sections 11 of the daylighting device 101, light L2 reflects upward inside the daylighting sections 11, passes through the base material 10, and then enters the light-diffusing layer 105 where light L2 is diffused in the vertical direction. The diffusion of light in the light-diffusing layer 105, albeit a slight compromise on the strength of light L2, results in a uniform intensity distribution, which in turn achieves more uniform illumination of the ceiling and wall surfaces of the room's interior 3.

Of light L entering the daylighting sections 11 of the daylighting device 101, light L2a reflects downward inside the daylighting sections 11, passes through the base material 10, and then enters the light-diffusing layer 105 where light L2a is diffused in the vertical direction before exiting the light-diffusing layer 105 and propagating obliquely downward in the interior 3. Light L2a is attenuated in intensity by the diffusion in the light-diffusing layer 105 and becomes less glaring to persons in the interior 3. The daylighting device 101 in accordance with the present embodiment may be capable of suppression of glaring light owing to the provision of the light-diffusing layer 105 as detailed here.

### Third Embodiment

Next will be described a daylighting device 201 in accordance with a third embodiment.

FIG. 14 is a vertical cross-sectional view of the daylighting device 201.

The daylighting device 201 in accordance with the third embodiment differs from the daylighting device 1 in accordance with the first embodiment in that the former includes a warping-restraining layer 205 that has a reflection-reducing function of reducing the reflection of light coming from the interior 3. Members that are substantially the same as members of a previous embodiment are indicated by the same reference numerals, and description thereof is omitted.

The daylighting device 201 includes a base material 10, a translucent daylighting layer 4, and the translucent warping-restraining layer (low reflection layer) 205. The base material 10 is a translucent plate. The daylighting layer 4 is disposed on the first face 10a of the base material 10. The warping-restraining layer 205 is disposed on the second face 10b of the base material 10.

The warping-restraining layer 205, similarly to the warping-restraining layer 5 of the first embodiment, preferably has a linear expansion coefficient that is approximately equal to the linear expansion coefficient of the daylighting layer 4. The warping-restraining layer 205 also preferably has a maximum and a minimum expansion direction that match substantially with the maximum and the minimum expansion direction of the daylighting layer 4 respectively.

The warping-restraining layer 205 has a reflection-reducing function of reducing reflection of light. In other words, the warping-restraining layer 205 functions as a low reflection layer. Throughout the following description, the warping-restraining layer 205 will be referred to as the "low reflection layer."

The low reflection layer 205 has a moth-eye structure that reduces interfacial reflection by eliminating abrupt changes in refractive index, which is achieved by minuscule pyramidal structures with dimensions below visible light wavelengths. Alternatively, the low reflection layer 205 may include an AR-treated film that in turn includes, for example, a multilayered film. The AR-treated film reflects outdoor light optically by way of interference.

The daylighting device 201 reflects less of the light coming from the interior 3 owing to the provision of the low reflection layer 205. This structure hence restrains reflected images from appearing on the indoor surface of the daylighting device 201 (i.e., the surface of the low reflection layer 205). That may in turn render a deformation of the surface of the daylighting device 201 less recognizable because such a deformation is relatively visible in reflected images. The present embodiment may suppress formation of reflected images, thereby rendering a deformation of the surface of the daylighting device 201 less recognizable.

### Fourth Embodiment

Next will be described a daylighting device 301 in accordance with a fourth embodiment.

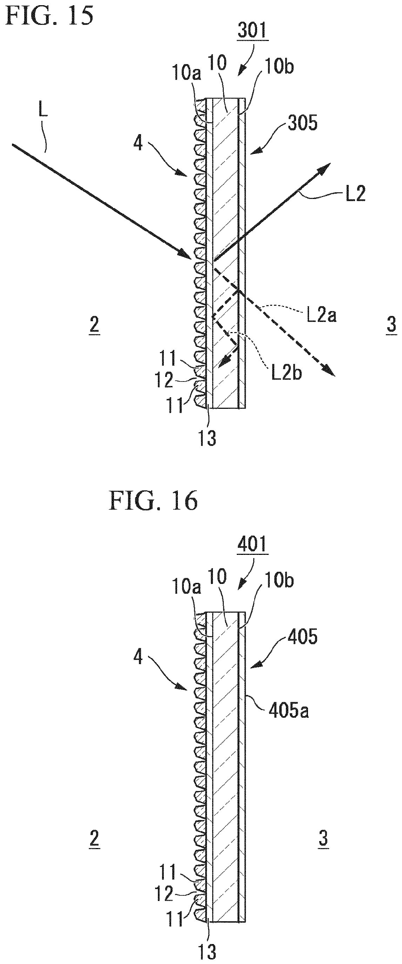

FIG. 15 is a vertical cross-sectional view of the daylighting device 301.

The daylighting device 301 in accordance with the fourth embodiment differs from the daylighting device 1 in accordance with the first embodiment in that the former includes a warping-restraining layer 305 that has a dimming function of absorbing incident light. Members that are substantially the same as members of a previous embodiment are indicated by the same reference numerals, and description thereof is omitted.

The daylighting device 301 includes a base material 10, a translucent daylighting layer 4, and the translucent warping-restraining layer (dimming layer) 305. The base material 10 is a translucent plate. The daylighting layer 4 is disposed on the first face 10a of the base material 10. The warping-restraining layer 305 is disposed on the second face 10b of the base material 10.

The warping-restraining layer 305, similarly to the warping-restraining layer 5 of the first embodiment, preferably has a linear expansion coefficient that is approximately equal to the linear expansion coefficient of the daylighting layer 4. The warping-restraining layer 305 also preferably has a maximum and a minimum expansion direction that match substantially with the maximum and the minimum expansion direction of the daylighting layer 4 respectively.

The warping-restraining layer 305 has a dimming function of absorbing incident light. In other words, the warping-restraining layer 305 functions as a dimming layer. Throughout the following description, the warping-restraining layer 305 will be referred to as the "dimming layer."

The dimming layer 305 is made of a film that reduces light transmission by, for example, partially absorbing light therein or on a surface thereof. The dimming layer 305 may be made of either a transparent film containing a pigment that absorbs only light of specific wavelengths within the visible range or a transparent film containing a component that absorbs light of all wavelengths.

In the daylighting device 301 in accordance with the present embodiment, the dimming layer 305 absorbs, of light L incident to the daylighting device 301, light L2a refracted obliquely downward by the daylighting layer 4 and projected toward the floor of the interior 3 and light L2b repeatedly reflected inside the base material 10 ("stray glaring light"). Light L2a and L2b could otherwise reach occupants as uncomfortable glaring light. Therefore, the daylighting device 301 in accordance with the present embodiment may be capable of suppression of glaring light owing to the dimming layer 305.

### Fifth Embodiment

Next will be described a daylighting device 401 in accordance with a fifth embodiment.

FIG. 16 is a vertical cross-sectional view of the daylighting device 401.

The daylighting device 401 in accordance with the fifth embodiment differs from the daylighting device 1 in accordance with the first embodiment in that the former includes a warping-restraining layer 405 that has an antistatic function. Members that are substantially the same as members of a previous embodiment are indicated by the same reference numerals, and description thereof is omitted.

The daylighting device 401 includes a base material 10, a translucent daylighting layer 4, and the translucent warping-restraining layer (antistatic layer) 405. The base material 10 is a translucent plate. The daylighting layer 4 is disposed on the first face 10a of the base material 10. The warping-restraining layer 405 is disposed on the second face 10b of the base material 10.

The warping-restraining layer 405, similarly to the warping-restraining layer 5 of the first embodiment, preferably has a linear expansion coefficient that is approximately equal to the linear expansion coefficient of the daylighting layer 4. The warping-restraining layer 405 also preferably has a maximum and a minimum expansion direction that match substantially with the maximum and the minimum expansion direction of the daylighting layer 4 respectively.

The warping-restraining layer 405 has an antistatic function. In other words, the warping-restraining layer 405 functions as an antistatic layer. Throughout the following description, the warping-restraining layer 405 will be referred to as the "antistatic layer."

The antistatic layer 405 may be made of a surfactant applied to a surface 405a. In this structure, the antistatic layer 405 provides an antistatic effect owing to a hydrophilic base film that, being functional on the molecular level, adsorbs water in the air. Alternatively, the antistatic layer 405 may be a film of a siloxane-based chemical applied to the surface 405a. In this structure, the antistatic layer 405 provides an antistatic effect owing to hydroxy groups adsorbing water in intake air. As further alternatives, the antistatic layer 405 may be a transparent acrylic film containing ammonium tetrachloride base that is formed on the surface 405a and may be a transparent, electrically conductive paint applied to the surface 405a.

The daylighting device 401 in accordance with the present embodiment may be capable of preventing dust from electrostatically attaching, owing to the antistatic function of the warping-restraining layer 405.

### Sixth Embodiment

Next will be described a daylighting device 501 in accordance with a sixth embodiment.

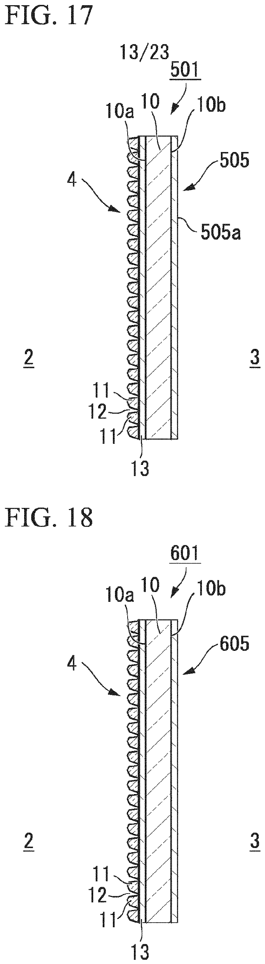

FIG. 17 is a vertical cross-sectional view of the daylighting device 501.

The daylighting device 501 in accordance with the sixth embodiment differs from the daylighting device 1 in accordance with the first embodiment in that the former includes a warping-restraining layer 505 that has a hard coating 505a formed on a surface thereof. Members that are substantially the same as members of a previous embodiment are indicated by the same reference numerals, and description thereof is omitted.

The daylighting device 501 includes a base material 10, a translucent daylighting layer 4, and the translucent warping-restraining layer 505. The base material 10 is a translucent plate. The daylighting layer 4 is disposed on the first face 10a of the base material 10. The warping-restraining layer 505 is disposed on the second face 10b of the base material 10.

The warping-restraining layer 505, similarly to the warping-restraining layer 5 of the first embodiment, preferably has a linear expansion coefficient that is approximately equal to the linear expansion coefficient of the daylighting layer 4. The warping-restraining layer 505 also preferably has a maximum and a minimum expansion direction that match substantially with the maximum and the minimum expansion direction of the daylighting layer 4 respectively.

The daylighting device 501 in accordance with the present embodiment may be capable of preventing scratches on the surface of the warping-restraining layer 505 owing to the provision of the hard coating 505a on the surface thereof. The hard coating 505a may be made of, for example, a polyurethane-based material.

### Seventh Embodiment

Next will be described a daylighting device 601 in accordance with a seventh embodiment.

FIG. 18 is a vertical cross-sectional view of the daylighting device 601.

The daylighting device 601 in accordance with the seventh embodiment differs from the daylighting device 1 in accordance with the first embodiment in that the former includes a warping-restraining layer 605 that has an electromagnetic shield function. Members that are substantially the same as members of a previous embodiment are indicated by the same reference numerals, and description thereof is omitted.

The daylighting device 601 includes a base material 10, a translucent daylighting layer 4, and the translucent warping-restraining layer (electromagnetic shield layer) 605. The base material 10 is a translucent plate. The daylighting layer 4 is disposed on the first face 10a of the base material 10. The warping-restraining layer 605 is disposed on the second face 10b of the base material 10.

The warping-restraining layer 605, similarly to the warping-restraining layer 5 of the first embodiment, preferably has a linear expansion coefficient that is approximately equal to the linear expansion coefficient of the daylighting layer 4. The warping-restraining layer 605 also preferably has a maximum and a minimum expansion direction that match substantially with the maximum and the minimum expansion direction of the daylighting layer 4 respectively.

The warping-restraining layer 605 has an electromagnetic shield function. In other words, the warping-restraining layer 605 functions as an electromagnetic shield layer. Throughout the following description, the warping-restraining layer 605 will be referred to as the "electromagnetic shield layer."

The electromagnetic shield layer 605 in accordance with the present embodiment may be capable of shielding the interior 3 from mobile phone and other electromagnetic waves, thereby preventing malfunctioning of devices in the interior 3. The electromagnetic shield layer 605 also prevents radio waves for a LAN network (local area network) used in the interior 3 from leaking out of the interior 3, thereby preventing information leaks.

### Eighth Embodiment

Next will be described a daylighting device 701 in accordance with an eighth embodiment.

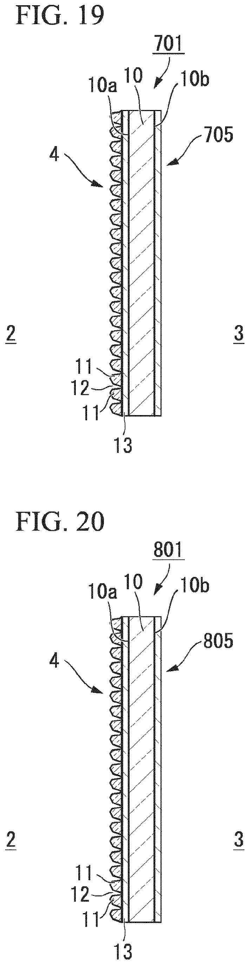

FIG. 19 is a vertical cross-sectional view of the daylighting device 701.

The daylighting device 701 in accordance with the eighth embodiment differs from the daylighting device 1 in accordance with the first embodiment in that the former includes a warping-restraining layer 705 that has a UV cutoff function. Members that are substantially the same as members of a previous embodiment are indicated by the same reference numerals, and description thereof is omitted.

The daylighting device 701 includes a base material 10, a translucent daylighting layer 4, and the translucent warping-restraining layer (UV cutoff layer) 705. The base material 10 is a translucent plate. The daylighting layer 4 is disposed on the first face 10a of the base material 10. The warping-restraining layer 705 is disposed on the second face 10b of the base material 10.

The warping-restraining layer 705, similarly to the warping-restraining layer 5 of the first embodiment, preferably has a linear expansion coefficient that is approximately equal to the linear expansion coefficient of the daylighting layer 4. The warping-restraining layer 705 also preferably has a maximum and a minimum expansion direction that match substantially with the maximum and the minimum expansion direction of the daylighting layer 4 respectively.

The warping-restraining layer 705 has a UV cutoff function. In other words, the warping-restraining layer 705 functions as a UV cutoff layer. Throughout the following description, the warping-restraining layer 705 will be referred to as the "UV cutoff layer."

The UV cutoff layer 705 contains, for example, a benzophenone-based, a benzotriazole-based, or another ultraviolet light absorbent. The UV cutoff layer 705, having such a composition, may be capable of absorbing ultraviolet light, thereby reducing ultraviolet light reaching the interior 3 and hence restraining the wall surfaces and furniture in the interior 3 from degrading under ultraviolet light.

### Ninth Embodiment

Next will be described a daylighting device 801 in accordance with a ninth embodiment.

FIG. 20 is a vertical cross-sectional view of the daylighting device 801.

The daylighting device 801 in accordance with the ninth embodiment differs from the daylighting device 1 in accordance with the first embodiment in that the former includes a warping-restraining layer 805 that has a heat ray cutoff function. Members that are substantially the same as members of a previous embodiment are indicated by the same reference numerals, and description thereof is omitted.

The daylighting device 801 includes a base material 10, a translucent daylighting layer 4, and the translucent warping-restraining layer (heat ray cutoff layer) 805. The base material 10 is a translucent plate. The daylighting layer 4 is disposed on the first face 10a of the base material 10. The warping-restraining layer 805 is disposed on the second face 10b of the base material 10.

The warping-restraining layer 805, similarly to the warping-restraining layer 5 of the first embodiment, preferably has a linear expansion coefficient that is approximately equal to the linear expansion coefficient of the daylighting layer 4. The warping-restraining layer 805 also preferably has a maximum and a minimum expansion direction that match substantially with the maximum and the minimum expansion direction of the daylighting layer 4 respectively.

The warping-restraining layer 805 has a heat ray cutoff function. In other words, the warping-restraining layer 805 functions as a UV cutoff layer. Throughout the following description, the warping-restraining layer 805 will be referred to as the "heat ray cutoff layer."

The heat ray cutoff layer 805 contains, for example, indium tin oxide, antimony tin oxide, or another like infrared light absorbent. The heat ray cutoff layer 805, having such a composition, may be capable of absorbing infrared light, thereby reducing temperature rises in the interior 3 and hence easing the workload of cooling machines in the summer time.

### Tenth Embodiment

Next will be described a daylighting device 901 in accordance with a tenth embodiment.

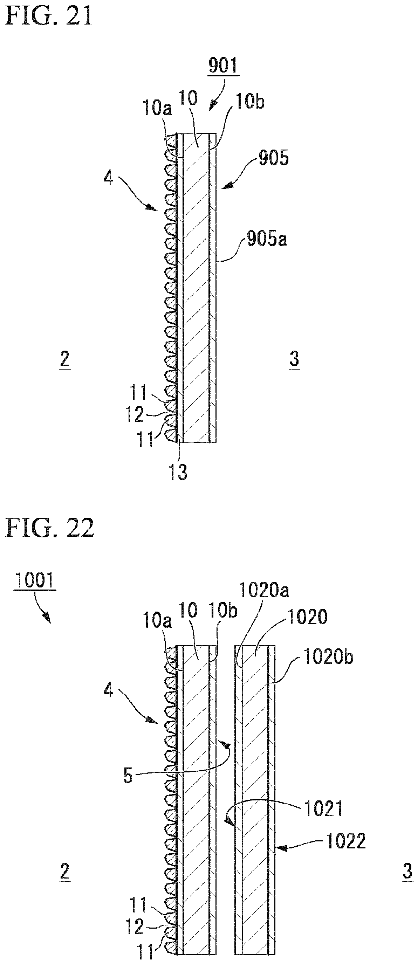

FIG. 21 is a vertical cross-sectional view of the daylighting device 901.

The daylighting device 901 in accordance with the tenth embodiment differs from the daylighting device 1 in accordance with the first embodiment in that the former includes a warping-restraining layer 905 that has a surface 905a thereof treated for soil resistance purposes. Members that are substantially the same as members of a previous embodiment are indicated by the same reference numerals, and description thereof is omitted.

The daylighting device 901 includes a base material 10, a translucent daylighting layer 4, and a translucent warping-restraining layer 905. The base material 10 is a translucent plate. The daylighting layer 4 is disposed on the first face 10a of the base material 10. The warping-restraining layer 905 is disposed on the second face 10b of the base material 10.

The warping-restraining layer 905, similarly to the warping-restraining layer 5 of the first embodiment, preferably has a linear expansion coefficient that is approximately equal to the linear expansion coefficient of the daylighting layer 4. The warping-restraining layer 905 also preferably has a maximum and a minimum expansion direction that match substantially with the maximum and the minimum expansion direction of the daylighting layer 4 respectively.

The surface 905a of the warping-restraining layer 905 in accordance with the present embodiment is treated for soil resistance purposes. This treatment may be capable of restraining dirt and grime from attaching to the surface of the daylighting device 901. The treatment may be done, for example, by coating the surface 905a of the warping-restraining layer 905 with a fluorine-based resin.

### Eleventh Embodiment

Next will be described a daylighting device 1001 in accordance with an eleventh embodiment.

FIG. 22 is a vertical cross-sectional view of the daylighting device 1001.

The daylighting device 1001 in accordance with the eleventh embodiment includes all the structure of the daylighting device 1 in accordance with the first embodiment and additionally includes a second base material 1020. Members that are substantially the same as members of a previous embodiment are indicated by the same reference numerals, and description thereof is omitted. Throughout the following description, the base material 10 of the first embodiment will be referred to as the "first base material 10."

The daylighting device 1001 includes a first base material 10 and the second base material 1020. The first base material 10 is a translucent plate. The second base material 1020 is a translucent plate and disposed backward of the first base material 10 with respect to the thickness direction of the first base material 10 (the interior 3 side of the first base material 10). The daylighting device 1001 further includes a translucent daylighting layer 4 on the first face 10a of the first base material 10 and a translucent, first warping-restraining layer 5 on the second face 10b of the first base material 10. The second base material 1020 has a first face 1020a on which there is provided a light-diffusing layer 1021 for diffusing incident light and a second face 1020b on which there is provided a translucent, second warping-restraining layer 1022. The light-diffusing layer 1021 has a light-diffusing function of diffusing incident light.

The first base material 10 and the second base material 1020 are disposed parallel to each other in the present embodiment. The second face 10b of the first base material 10 faces the first face 1020a of the second base material 1020.

Similarly to the first embodiment, the daylighting layer 4 and the first warping-restraining layer 5 preferably have approximately equal linear expansion coefficients. The daylighting layer 4 and the warping-restraining layer 5 also preferably have substantially the same maximum and minimum expansion directions.

The light-diffusing layer 1021 and the second warping-restraining layer 1022 preferably have approximately equal linear expansion coefficients. The light-diffusing layer 1021 and the warping-restraining layer 1022 also preferably have substantially the same maximum and minimum expansion directions.

This structure may be capable of restraining both the first base material 10 and the second base material 1020 from warping due to thermal expansion that ensues from a change in temperature.

In the daylighting device 1001 in accordance with the present embodiment, light passes through the daylighting layer 4 and then passes through the light-diffusing layer 1021. The light, having been diffused as it passes through the light-diffusing layer 1021, may more uniformly illuminate the ceiling and wall surfaces of the room's interior 3. The diffusion of light by the light-diffusing layer 1021 may also reduce glaring light.

In the present embodiment, the second base material 1020 is disposed backward of the first base material 10 (the interior 3 side of the first base material 10) as an example. Alternatively, the second base material 1020 may be disposed forward of the first base material 10 (the exterior 2 side of the first base material 10). As a further alternative, the daylighting layer 4 may be provided either on a surface of the first base material 10 facing the interior 3 or on a surface of the first base material 10 facing the exterior 2, in which cases the warping-restraining layer 5 is provided on a face of the first base material 10 opposite the daylighting layer 4.

### Twelfth Embodiment

Next will be described a daylighting device 1101 in accordance with a twelfth embodiment.

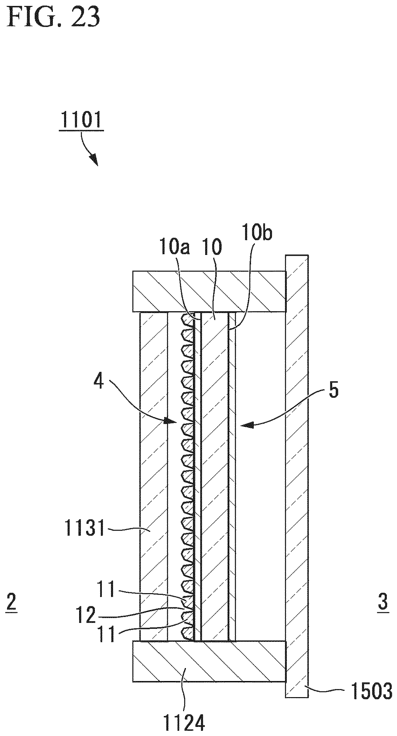

FIG. 23 is a vertical cross-sectional view of the daylighting device 1101. FIG. 22 additionally shows a window pane 1503 to which the daylighting device 1101 is to be attached.

The daylighting device 1101 differs from the daylighting device 1 in accordance with the first embodiment primarily in that the former includes a transparent plate 1131 and the outer frame 1124. Members that are substantially the same as members of a previous embodiment are indicated by the same reference numerals, and description thereof is omitted.

The daylighting device 1101 includes a base material 10, a translucent daylighting layer 4, a translucent warping-restraining layer 5, and the outer frame 1124. The base material 10 is a translucent plate. The daylighting layer 4 is disposed on the first face 10a of the base material 10. The warping-restraining layer 5 is disposed on the second face 10b of the base material 10. The outer frame 1124 surrounds the base material 10 and the transparent plate 1131 in front view to hold them together.

The present embodiment may achieve advantages that are similar to those achieved by the first embodiment.

The present embodiment may additionally protect the daylighting sections 11 since the daylighting sections 11 are positioned between the base material 10 and the transparent plate 1131. This structure may prevent scratches on the daylighting sections 11. Additionally, the structure may seal out the space containing the daylighting sections 11, thereby restraining the daylighting sections 11 from coming into contact with air and hence the resin material for the daylighting sections 11 from degrading.

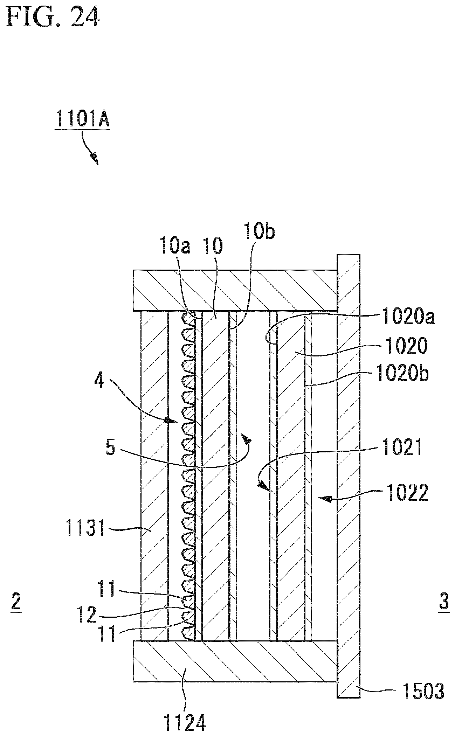

A daylighting device of another embodiment may be disposed between the transparent plate 1131 and the window pane 1503 of the present embodiment. A daylighting device 1101A shown in FIG. 24, which is a variation example, may be constructed by disposing the first base material 10 and the second base material 1020 between the transparent plate 1131 and the window pane 1503.

### Thirteenth Embodiment

Next will be described a daylighting device 1201 in accordance with a thirteenth embodiment.

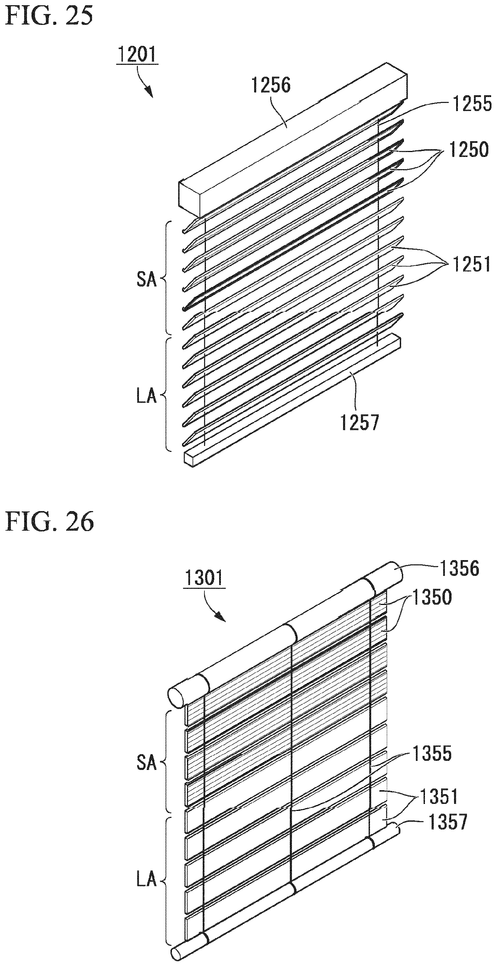

FIG. 25 is a perspective view of an overall structure of the daylighting device 1201. The daylighting device 1201 is a type of horizontal window blind. The daylighting device 1201 includes a plurality of daylighting slats 1250, a plurality of shading slats 1251, binding members 1255, an upper rail 1256, and a lower rail 1257. The daylighting slats 1250 and the shading slats 1251 are shaped like narrow flat strips and mounted one above each other in the vertical direction such that their length coincides with a horizontal direction. The binding members 1255 thread the daylighting slats 1250 in a state where they are arranged in one direction. The upper rail 1256 sits atop the parallel daylighting slats 1250. The lower rail 1257 provides a bottom for the daylighting slats 1250. The upper rail 1256 and the binding members 1255 constitute a tilting mechanism for tilting the daylighting slats 1250 and the shading slats 1251.

The daylighting slats 1250 have the same basic structure as the daylighting device 1 in accordance with the first embodiment. Specifically, each daylighting slat 1250 includes a light-transmitting base material 10, a daylighting layer 4, and a warping-restraining layer 5. The daylighting layer 4 is disposed on the first face 10a of the base material 10. The warping-restraining layer 5 is disposed on the second face 10b of the base material 10. To put it differently, it may be said that in the daylighting device 1201, the base material 10 of the first embodiment is divided into the strip-like daylighting slats 1250, which are suspended one above each other perpendicularly to their length.

Meanwhile, the shading slats 1251 are made of a material that does not transmit light. The shading slats 1251 are made of, for example, an aluminum alloy.

The area where the daylighting slats 1250 and the shading slats 1251 are mounted in the daylighting device 1201 may be divided into two areas: a daylighting area SA and a shading area LA. The daylighting area SA is an upper part of that area in front view, whereas the shading area LA is a lower part of the area. The daylighting slats 1250 are arranged in the daylighting area SA, whereas the shading slats 1251 are arranged in the shading area LA. The daylighting area SA is provided, for example, at least 180 cm above the floor surface, with the daylighting slats 1250 and the shading slats 1251 of the daylighting device 1201 being all lowered. This positioning may reduce the possibility that the light reflected off the daylighting slats 1250 toward the ceiling directly strike an occupant's eyes in the room.

According to the present embodiment, the provision of the warping-restraining layer 5 in the daylighting slats 1250 may restrain the slats from warping in response to a change in the temperature of the slats and enable the light coming in from the exterior 2 to be reflected in a desired direction for daylighting.

The daylighting device 1201 in accordance with the present embodiment is a horizontal window blind with horizontally elongate slats. Alternatively, the daylighting device 1201 may be a vertical window blind with vertically elongate slats.

### Fourteenth Embodiment

Next will be described a daylighting device 1301 in accordance with a fourteenth embodiment.

FIG. 26 is a perspective view of an overall structure of the daylighting device 1301. The daylighting device 1301 is a type of roller curtain or rattan blind. The daylighting device 1301 includes a plurality of daylighting slats 1350, a plurality of shading slats 1351, binding members 1355, an upper rail 1356, and a lower rail 1357. The daylighting slats 1350 and the shading slats 1351 are shaped like narrow flat strips and mounted one above each other in the vertical direction such that their length coincides with a horizontal direction. The binding members 1355 thread the daylighting slats 1350 in a state where they are arranged in one direction. The upper rail 1356 sits atop the parallel daylighting slats 1350. The lower rail 1357 provides a bottom for the daylighting slats 1350. The daylighting device 1301 in accordance with the present embodiment differs from the daylighting device 1201 in accordance with the thirteenth embodiment primarily in that the former includes no tilting mechanism.

The daylighting slats 1350 have the same basic structure as the daylighting device 1 in accordance with the first embodiment. Specifically, each daylighting slat 1350 includes a light-transmitting base material 10, a daylighting layer 4, and a warping-restraining layer 5. The daylighting layer 4 is disposed on the first face 10a of the base material 10. The warping-restraining layer 5 is disposed on the second face 10b of the base material 10. Meanwhile, the shading slats 1351 are made of a material that does not transmit light. The shading slats 1351 are made of, for example, an aluminum alloy.

The daylighting device 1301 in accordance with the present embodiment may achieve advantages that are similar to those achieved by the daylighting device in accordance with the thirteenth embodiment.

The daylighting area SA and the shading area LA may be arranged differently in the daylighting device 1201 in accordance with the thirteenth embodiment and the daylighting device 1301 in accordance with the fourteenth embodiment. As an example, the daylighting area SA may occupy the whole area, with all slats being the daylighting slats 1250 or 1350. Alternatively, the daylighting areas SA and the shading areas LA may be arranged alternately in the vertical direction.

### Fifteenth Embodiment

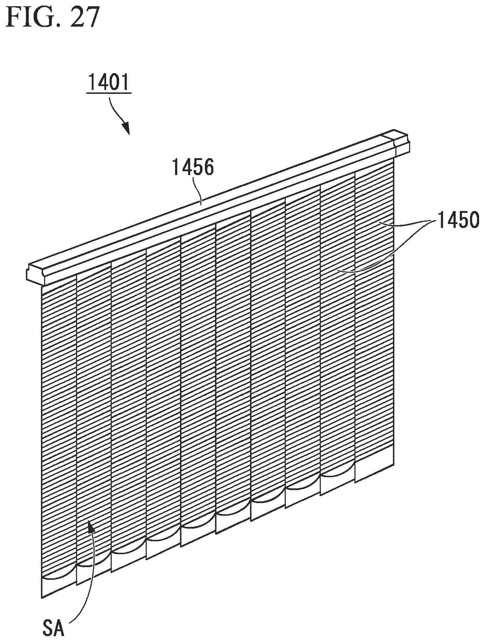

Next will be described a daylighting device 1401 in accordance with a fifteenth embodiment. FIG. 27 is a perspective view of an overall structure of the daylighting device 1401. The daylighting device 1401 is a type of vertical window blind. In other words, the daylighting device 1401 differs from the daylighting device 1201 in accordance with the thirteenth embodiment, which is a type of horizontal window blind, in that the former includes vertically suspended slats.

The daylighting device 1401 includes a rail unit 1456 and a plurality of daylighting slats 1450. The rail unit 1456 is to be disposed atop a window so as to extend in a horizontal direction. The daylighting slats 1450 are shaped like narrow flat strips suspended side by side from the rail unit 1456. The rail unit 1456 includes a tilting mechanism (not shown) therein to tilt the daylighting slats 1450.

The daylighting slats 1450 have the same basic structure as the daylighting device 1 in accordance with the first embodiment. Specifically, each daylighting slat 1450 includes a light-transmitting base material 10, a plurality of daylighting sections 11, and a plurality of gap portions 12. The daylighting sections 11 are disposed on the first face 10a of the base material 10. The gap portions 12 are provided between the daylighting sections 11.

The daylighting device 1401 in accordance with the present embodiment may achieve advantages that are similar to those achieved by the daylighting device in accordance with the thirteenth embodiment.

The daylighting devices 1201, 1301, and 1401 in accordance with the thirteenth, fourteenth, and fifteenth embodiments respectively may include an electric motor for winding up the slits for storage purposes. The daylighting devices 1201 and 1401 in accordance with the thirteenth and fifteenth embodiments respectively may include an electric motor in the slit-tilting mechanism thereof. When this is actually the case, the slits may be wound up, stored, or tilted electrically. Either additionally or alternatively, the daylighting devices 1201, 1301, and 1401 may be configured to allow for remote control of the winding, storing, or tilting through a switch and/or a remote controller.

### Daylighting System

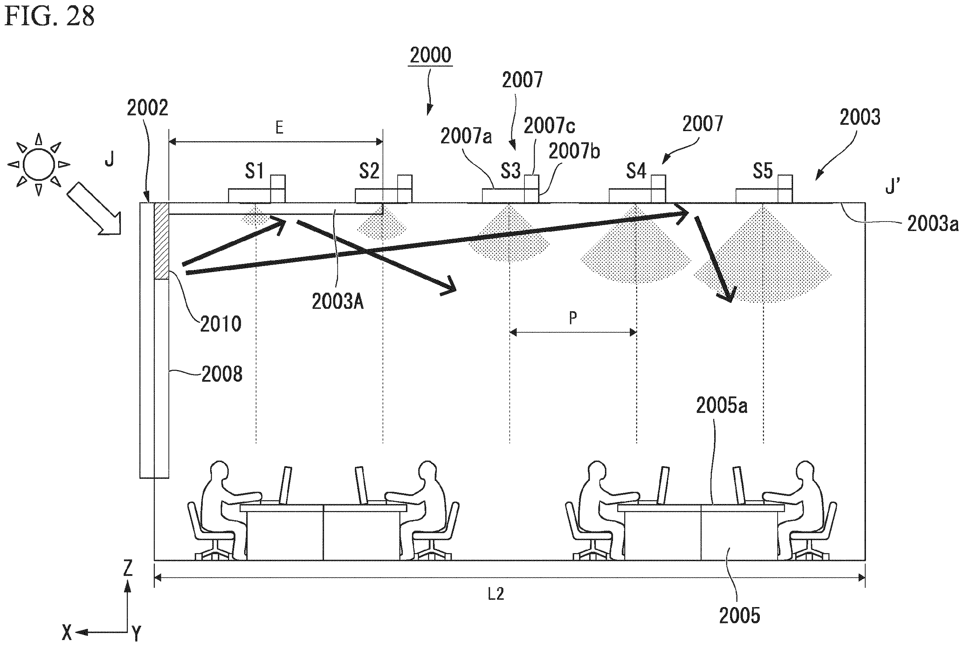

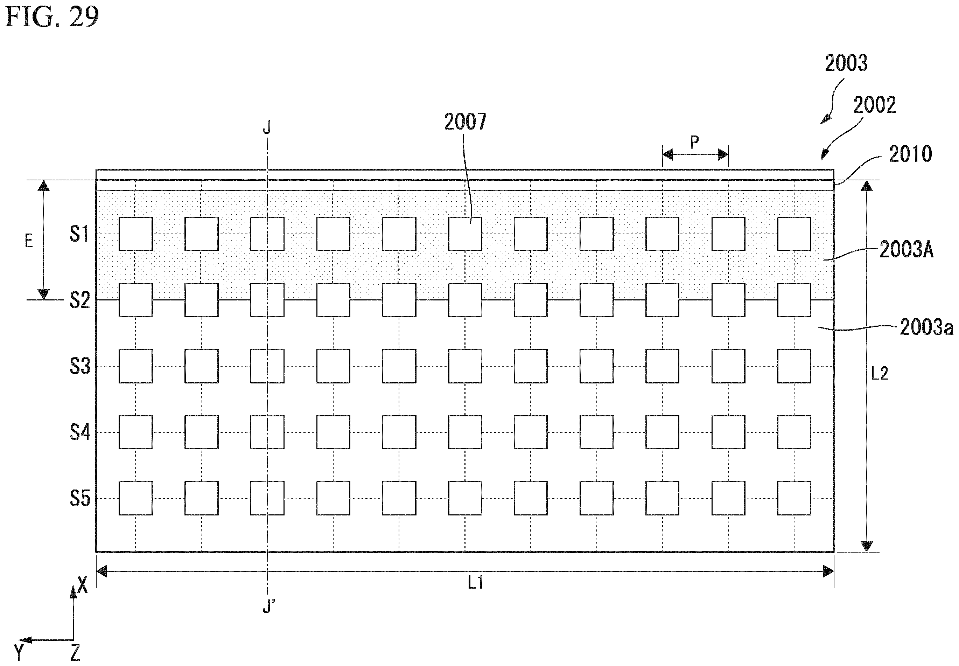

FIG. 28 is a cross-sectional view, taken along line J-J' in FIG. 29, of a room model in which a daylighting device and a daylighting system are installed. FIG. 29 is a plan view of a ceiling of the room model 2000.

In the room model 2000, a room 2003 into which outdoor light is guided has a ceiling 2003a constituted partly by a ceiling material that may have strong light-reflecting properties. Referring to FIGs. 28 and 29, the ceiling 2003a of the room 2003 is provided with a light-reflecting ceiling material 2003A as a ceiling material having such light-reflecting properties. The light-reflecting ceiling material 2003A is for facilitating the guiding of outdoor light from a daylighting device 2010 installed over a window 2002 deep into the interior. The light-reflecting ceiling material 2003A is disposed on a part of the ceiling 2003a close to the window, specifically, on predetermined part E of the ceiling 2003a (approximately up to 3 meters from the window 2002).

The light-reflecting ceiling material 2003A, as described above, serves to efficiently direct deep into the interior the outdoor light guided indoors through the window 2002 on which the daylighting device 2010 (any of the daylighting devices of the abovementioned embodiments) is installed. The outdoor light guided in the direction of the indoor ceiling 2003a by the daylighting device 2010 is reflected by the light-reflecting ceiling material 2003A, hence changing direction and illuminating a desk top face 2005a of a desk 2005 located deep in the interior. Thus, the light-reflecting ceiling material 2003A has the advantage of brightly lighting up the desk top face 2005a.

The light-reflecting ceiling material 2003A may be either diffuse reflective or specular reflective. Preferably, the light-reflecting ceiling material 2003A has a suitable mix of these properties to achieve both the advantage of brightly lighting up the desk top face 2005a of the desk 2005 located deep in the interior and the advantage of mitigating glare which is uncomfortable to occupants.

Much of the light guided indoors by the daylighting device 2010 travels in the direction of the part of the ceiling that is close to the window 2002. Still, the part of the interior close to the window 2002 often has sufficient lighting. Therefore, the light that strikes the ceiling near the window (part E) can be partially diverted to a deep part of the interior where lighting is poor compared to the part near the window, by additionally using the light-reflecting ceiling material 2003A described here.

The light-reflecting ceiling material 2003A may be manufactured, for example, by embossing convexities and concavities each of approximately a few tens of micrometers on an aluminum or similar metal plate or by vapor-depositing a thin film of aluminum or a similar metal on the surface of a resin substrate having similar convexities and concavities formed thereon. Alternatively, the embossed convexities and concavities may be formed from a curved surface with a higher cycle.

Furthermore, the embossed shape formed on the light-reflecting ceiling material 2003A may be changed as appropriate to control light distribution properties thereof and hence resultant indoor light distribution. For example, if stripes extending deep into the interior are embossed, the light reflected by the light-reflecting ceiling material 2003A is spread to the left and right of the window 2002 (in the directions that intersect the length of the convexities and concavities). When the window 2002 of the room 2003 is limited in size or orientation, these properties of the light-reflecting ceiling material 2003A can be exploited to diffuse light in horizontal directions and at the same time to reflect the light deep into the room.

The daylighting device 2010 is used as a part of a daylighting system for the room 2003. The daylighting system includes, for example, the daylighting device 2010, a plurality of room lighting devices 2007, an insolation adjustment device 2008 installed over the window, a control system for these devices, the light-reflecting ceiling material 2003A installed on the ceiling 2003a, and other structural members of the whole room.

The window 2002 of the room 2003 has the daylighting device 2010 installed over an upper portion thereof and the insolation adjustment device 2008 installed over a lower portion thereof. In this example, the insolation adjustment device 2008 is a window shade, which is by no means intended to limit the scope of the invention.

In the room 2003, the room lighting devices 2007 are arranged in a lattice in the left/right direction of the window 2002 and in the depth direction of the room. These room lighting devices 2007, in combination with the daylighting device 2010, constitute an illumination system for the whole room 2003.

Referring to FIGs. 28 and 29 illustrating the office ceiling 2003a, for example, the window 2002 has a length L₁ of 18 meters in the left/right direction, and the room 2003 has a length L₂ of 9 meters in the depth direction. The room lighting devices 2007 in this example are arranged in a lattice in the length and depth of the ceiling 2003a at intervals P each of 1.8 meters. More specifically, a total of 50 room lighting devices 2007 is arranged in a lattice of 10 rows and 5 columns.

Each room lighting device 2007 includes an interior lighting fixture 2007a, a brightness detection unit 2007b, and a control unit 2007c. The brightness detection unit 2007b and the control unit 2007c are integrated into the interior lighting fixture 2007a to form a single structure.

Each room lighting device 2007 may include two or more interior lighting fixtures 2007a and two or more brightness detection units 2007b, with one brightness detection unit 2007b for each interior lighting fixture 2007a. The brightness detection unit 2007b receives light reflection off the face illuminated by the interior lighting fixture 2007a to detect illuminance on that face. In this example, the brightness detection unit 2007b detects illuminance on the desk top face 2005a of the desk 2005 located indoors.

The control units 2007c, each for a different one of the room lighting devices 2007, are connected to each other. In each room lighting device 2007, the control unit 2007c, connected to the other control units 2007c, performs feedback control to adjust the light output of an LED lamp in the interior lighting fixture 2007a so that the illuminance on the desk top face 2005a detected by the brightness detection unit 2007b is equal to a predetermined target illuminance L₀ (e.g., average illuminance: 750 lx).

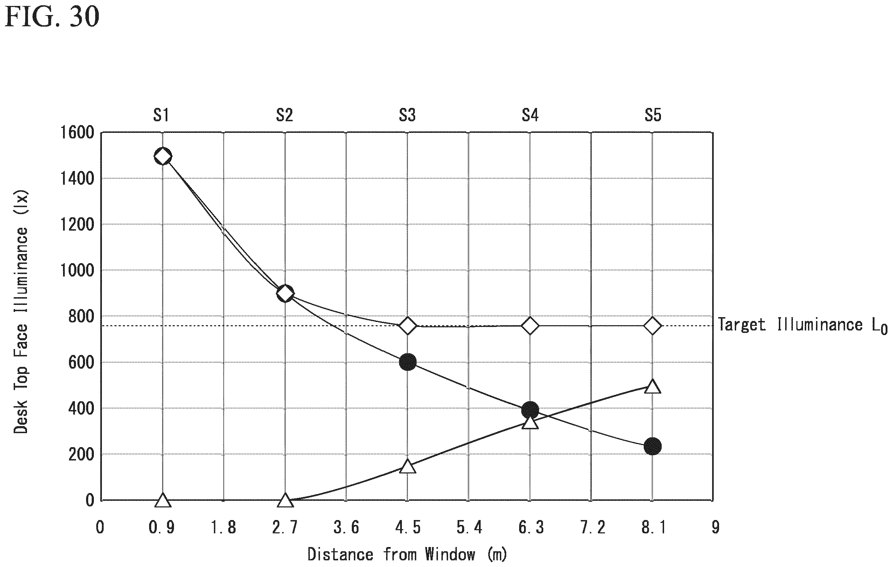

FIG. 30 is a graph representing a relationship between the illuminance produced by the daylighting light (natural light) guided into the interior by the daylighting device and the illuminance produced by the room lighting devices (daylighting system). In FIG. 30, the vertical axis indicates illuminance (lx) on the desk top face, and the horizontal axis indicates distance (meters) from the window. The broken line in the figure represents a target indoor illuminance. Each black circle denotes an illuminance produced by the daylighting device, each white triangle denotes an illuminance produced by the room lighting devices, and each white diamond denotes a total illuminance.

Referring to FIG. 30, the desk top face illuminance attributable to the daylighting light guided by the daylighting device 2010 is highest at the window and decreases with increasing distance from the window. This illuminance distribution in the depth direction of the room is caused during the daytime by natural daylight coming through a window into the room in which the daylighting device 2010 is installed. Accordingly, the daylighting device 2010 is used in combination with the room lighting devices 2007 which enhance the indoor illuminance distribution. The room lighting devices 2007, disposed on the indoor ceiling, detect an average illuminance below them by means of the brightness detection units 2007b and light up in a modulated manner such that the desk top face illuminances across the whole room are equal to the predetermined target illuminance L₀. Therefore, a column S1 and a column S2 near the window only dimly light up, whereas a column S3, a column S4, and a column S5 light up so as to produce output that increases with increasing depth into the room. Consequently, the desk top faces across the whole room are lit up by the sum of the illumination by natural daylight and the illumination by the room lighting devices 2007 at a desk top face illuminance of 750 lx, which is regarded as being sufficient for desk work (see, JIS Z9110, General Rules of Recommended Lighting Levels, Recommended Illuminance at Offices).

As described above, light can be delivered deep into the interior by using both the daylighting device 2010 and the daylighting system (room lighting devices 2007) together. This can in turn further improve indoor brightness and ensure a sufficient desk top face illuminance for desk work across the whole room, hence providing a more stable, brightly lit environment independently from the season and the weather.

Preferred embodiments of the present invention have been so far described in reference to the attached drawings. The present invention is by no means limited to the embodiments and examples described above. The person skilled in the art could obviously conceive variations and modifications within the scope of the claims. These variations and modifications are encompassed in the technical scope of the claims. The technical features disclosed in the embodiments may be combined where appropriate.

In each embodiment described above, for example, the daylighting sections 11 are disposed on the first face 10a which is provided on the exterior 2 side of the base material 10. Alternatively, the daylighting sections 11 may be disposed on the interior 3 side of the base material 10. With this alternative structure, the embodiments may still achieve the same advantages.

The warping-restraining layer of each embodiment may additionally provide two or more of the functions described in the embodiments. As an example, the warping-restraining layer in a daylighting device may provide a light-diffusing function and a UV cutoff function and further have a surface thereof treated for soil resistance.

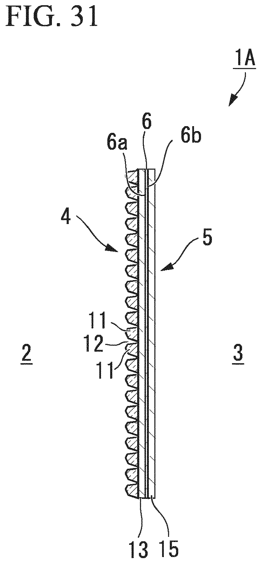

The daylighting device of each embodiment (e.g., the daylighting device 1 in accordance with the first embodiment) includes a base material 10 that is a translucent plate, a translucent daylighting layer 4 on the first face 10a of the base material 10, and a translucent warping-restraining layer 5 on the second face 10b of the base material 10. Alternatively, the daylighting device of each embodiment may have the daylighting layer 4 and the warping-restraining layer 5 being directly joined together via an adhesion layer 6. A daylighting device with this structure ("daylighting device 1A") will now be described in reference to FIG. 31. Members that are substantially the same as members of a previous embodiment are indicated by the same reference numerals, and description thereof is omitted.

The daylighting device 1A includes the daylighting layer 4, the warping-restraining layer 5, and the adhesion layer 6 for joining the daylighting layer 4 and the warping-restraining layer 5 together. The adhesion layer 6 is formed by cured adhesive and is a translucent layer corresponding to the base material 10 in the daylighting device of each embodiment. The adhesion layer 6 holds the daylighting layer 4 on a first face 6a thereof that faces the exterior 2 and holds the warping-restraining layer 5 on a second face 6b that faces the interior 3.

The warping-restraining layer 5 and the daylighting layer 4 have approximately equal linear expansion coefficients as in the above-described embodiments. Therefore, if the daylighting layer 4 thermally expands or contracts, the warping-restraining layer 5 thermally expands or contracts by approximately the same degree as the daylighting layer 4. This structure cancels out stresses produced on the first face 6a and the second face 6b of the adhesion layer 6 that could otherwise warp the daylighting layer 4 and the warping-restraining layer 5 respectively. The structure, as a whole, thereby restrains warping.

The advantages of each embodiment may be achieved, as demonstrated in the current variation example, even when the daylighting layer 4 and the warping-restraining layer 5 are directly joined by the adhesion layer 6. The adhesion layer 6 described in this variation example is an equivalent to the "base material" in the patent claims.

### Industrial Applicability

The present invention, in some aspects thereof, is applicable to, for example, day lighting devices and day lighting systems in which the occurrence of warping needs to be restrained.

### Reference Signs List

1, 101, 201, 301, 401, 501, 601, 701, 801, 901, 1001, 1101, 1101A, 1201, 1301, 2010 Daylighting Device
4 Daylighting Layer
5,105,205,305,405,505,605,705,805,905,1022 Warping-restraining Layer
10 Base Material
10a, 1020a First Face
10b, 1020b Second Face
11 Daylighting Section
12 Gap Portion
1020 Second Base Material
1124 Outer Frame
1250, 1350 Daylighting Slat
2007a Interior Lighting Fixture
2007c Control Unit

## Claims

1. A daylighting device, comprising:
a translucent base material;
a translucent daylighting layer disposed on a first face side of the base material, the daylighting layer comprising a plurality of daylighting sections and a plurality of gap portions provided between the daylighting sections; and
a translucent warping-restraining layer disposed on a second face side of the base material,
wherein the daylighting layer and the warping-restraining layer have approximately equal linear expansion coefficients.

2. The daylighting device according to claim 1, wherein:
the daylighting layer has an in-plane, maximum expansion direction in which the linear expansion coefficient thereof is a maximum and an in-plane, minimum expansion direction in which the linear expansion coefficient thereof is a minimum;
the warping-restraining layer has an in-plane, maximum expansion direction in which the linear expansion coefficient thereof is a maximum and an in-plane, minimum expansion direction in which the linear expansion coefficient thereof is a minimum; and
the maximum expansion directions of the daylighting layer and the warping-restraining layer match substantially with each other, and the minimum expansion directions of the daylighting layer and the warping-restraining layer match substantially with each other.

3. A daylighting device, comprising:
a translucent base material;
a translucent daylighting layer disposed on a first face side of the base material, the daylighting layer comprising a plurality of daylighting sections and a plurality of gap portions provided between the daylighting sections; and
a translucent warping-restraining layer disposed on a second face side of the base material,
wherein both the daylighting layer and the warping-restraining layer have either a greater linear expansion coefficient or a smaller linear expansion coefficient than does the base material.

4. The daylighting device according to claim 3, wherein the linear expansion coefficient of one of the daylighting layer and the warping-restraining layer that lies on a light-incident side of the base material is smaller than the linear expansion coefficient of the other one of the layers.

5. The daylighting device according to any one of claims 1 to 4, the base material now being referred to as the first base material, the daylighting device further comprising:
a translucent second base material, the second base material being disposed forward or backward of the first base material with respect to a thickness direction of the first base material;
a light-diffusing layer disposed on a first face side of the second base material and configured to diffuse incident light; and
a translucent warping-restraining layer disposed on a second face side of the second base material.

6. The daylighting device according to any one of claims 1 to 5, further comprising an outer frame configured to hold the base material.

7. A daylighting system, comprising:
the daylighting device according to any one of claims 1 to 6;
an interior lighting fixture;
a detection unit configured to detect indoor brightness; and
a control unit configured to control the interior lighting fixture and the detection unit.
